(19) Europäisches Patentamt
European Patent Office
Office européen des brevets

(11) **EP 2 988 434 A1**

(12) **EUROPEAN PATENT APPLICATION**
published in accordance with Art. 153(4) EPC

(43) Date of publication:
**24.02.2016 Bulletin 2016/08**

(51) Int Cl.:
**H04B 7/26** (2006.01)     **H04W 48/08** (2009.01)

(21) Application number: **13885886.5**

(22) Date of filing: **28.05.2013**

(86) International application number:
**PCT/CN2013/076332**

(87) International publication number:
**WO 2014/190488 (04.12.2014 Gazette 2014/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **PANG, Lingli**
**Shenzhen**
**Guangdong 518129 (CN)**
• **ZHENG, Xiaoxiao**
**Shenzhen**
**Guangdong 518129 (CN)**

(74) Representative: **Epping - Hermann - Fischer**
**Patentanwaltsgesellschaft mbH**
**Schloßschmidstraße 5**
**80639 München (DE)**

(54) **DISCONTINUOUS TRANSMISSION METHOD, USER EQUIPMENT, AND NETWORK SIDE DEVICE**

(57) Embodiments of the present invention provide a discontinuous transmission method, user equipment, and a network side device, so as to reduce uplink interference to another user and improve a system capacity. The method includes: receiving, by a UE, discontinuous transmission DTX configuration information sent from a network side; when the UE is in a non-dedicated connected state, determining, by the UE, a transmission pattern of a dedicated physical control channel DPCCH according to the DTX configuration information; and sending, by the UE according to the transmission pattern, the DPCCH to a serving base station of the UE. In the embodiments of the present invention, the DPCCH is discontinuously sent in the non-dedicated connected state, so as to reduce the uplink interference and increase a quantity of users, thereby improving the system capacity.

```
┌─────────────────────────────────────────────────────────┐
│ The UE receives discontinuous transmission DTX           │  ⌐ 101
│ configuration information sent by a network side          │
└─────────────────────────────────────────────────────────┘
                            │
                            ▼
┌─────────────────────────────────────────────────────────┐
│ When the UE is in a non-dedicated connected state, the UE │  ⌐ 102
│ determines a transmission pattern of a dedicated physical │
│ control channel DPCCH according to the DTX configuration  │
│ information                                               │
└─────────────────────────────────────────────────────────┘
                            │
                            ▼
┌─────────────────────────────────────────────────────────┐
│ The UE sends, according to the transmission pattern, the  │  ⌐ 103
│ DPCCH to a serving base station of the UE                 │
└─────────────────────────────────────────────────────────┘
```

FIG. 1

**Description**

**TECHNICAL FIELD**

Embodiments of the present invention relate to the field of wireless communications, and in particular, to a discontinuous transmission method, user equipment, and a network side device.

**BACKGROUND**

As the 3rd Generation Partnership Project (the 3rd Generation Partnership Project, 3GPP) continuously optimizes, in a 3GPP standard, a cell-forward access channel (Cell Forward Access Channel, CELL_FACH) state, a part of a packet service that originally needs to be carried in a cell-dedicated channel (Cell Dedicated Channel, CELL_DCH) state can also be carried in the CELL_FACH state. Therefore, a CELL_FACH common enhanced dedicated channel (common Enhanced Channel, common E-DCH) feature is introduced, which enhances performance of uplink packet data transmission in the CELL_FACH state, so that user equipment obtains a relatively low packet transmission delay and a relatively high transmission rate.

However, currently, data transmission of the packet service in the CELL_FACH state is discontinuous. Many times of discontinuous data transmission may be performed in one interaction process, and whether data is transmitted or not, the user equipment (UE) always maintains a same connection status and occupies a same resource. In addition, when the UE occupies a resource but has no data transmission, control information, such as power control information and pilot signal, in an uplink dedicated physical control channel (Dedicated Physical Control Channel, DPCCH) is continuously sent, which causes uplink interference to another user and therefore limits a system capacity.

**SUMMARY**

Embodiments of the present invention provide a discontinuous transmission method, user equipment, and a network side device, so as to reduce uplink interference to another user and improve a system capacity.

According to a first aspect, a discontinuous transmission method is provided, including: receiving, by user equipment UE, discontinuous transmission DTX configuration information sent from a network side; when the UE is in a non-dedicated connected state, determining, by the UE, a transmission pattern of a dedicated physical control channel DPCCH according to the DTX configuration information; and sending, by the UE according to the transmission pattern, the DPCCH to a serving base station of the UE.

With reference to the first aspect, in a first implementation manner of the first aspect, before the determining, by the UE, a transmission pattern of a dedicated physical control channel DPCCH according to the DTX configuration information, the method further includes: sending DTX capability information of the UE in the non-dedicated connected state to the network side by using radio resource control RRC dedicated signaling; or sending DTX capability information of the UE in a cell-dedicated channel CELL_DCH state to the network side by using RRC dedicated signaling, so that the network side adopts the DTX capability information of the UE in the CELL_DCH state as DTX capability information of the UE in the non-dedicated connected state, where the DTX capability information of the UE in the non-dedicated connected state is used to indicate to the network side that the UE supports DTX in the non-dedicated connected state.

With reference to the first aspect and the foregoing implementation manner of the first aspect, in a second implementation manner of the first aspect, the receiving, by the UE, discontinuous transmission DTX configuration information sent from a network side includes: receiving the DTX configuration information by using system broadcast; or receiving the DTX configuration information by using RRC dedicated signaling; or receiving and adopting DTX configuration information in a cell-dedicated channel CELL_DCH state.

With reference to the first aspect and the foregoing implementation manners of the first aspect, in a third implementation manner of the first aspect, the receiving and adopting DTX configuration information in a cell-dedicated channel CELL_DCH state includes:

    receiving an indication that is sent by the network side by using the system broadcast or the RRC dedicated signaling and that is used to indicate that the UE adopts all or a part of the DTX configuration information in the cell-dedicated channel CELL_DCH state; or
    receiving the DTX configuration information in the CELL_DCH state, and adopting, in a manner of an agreement between the network side and the UE, all or a part of the DTX configuration information in the CELL_DCH state as DTX configuration information in the non-dedicated connected state.

With reference to the first aspect and the foregoing implementation manners of the first aspect, in a fourth implementation manner of the first aspect, the DTX configuration information includes: a first DTX cycle (UE DTX cycle 1); a DPCCH transmission length in the first DTX cycle (UE DPCCH burst_1); and a resource DTX offset parameter (Resource DTX offset) that is used to indicate a DTX offset corresponding to a different common enhanced dedicated channel common E-DCH resource configuration.

With reference to the first aspect and the foregoing implementation manners of the first aspect, in a fifth implementation manner of the first aspect, the DTX configuration information may further include: a second DTX cycle (UE DTX cycle 2); a DPCCH transmission length in the second DTX cycle (UE DPCCH burst_2); and time for starting the second DTX cycle (Inactivity Threshold for UE DTX cycle 2).

With reference to the first aspect and the foregoing implementation manners of the first aspect, in a sixth implementation manner of the first aspect, the determining, by the UE, a transmission pattern of a dedicated physical control channel DPCCH according to the DTX configuration information includes: when the UE has no data transmission, determining, according to the DTX configuration information, a frame number and a subframe number of sending the DPCCH.

With reference to the first aspect and the foregoing implementation manners of the first aspect, in a seventh implementation manner of the first aspect, when the UE has no data transmission, the determining, according to the DTX configuration information, a frame number and a subframe number of sending the DPCCH further includes: when the UE occupies a common E-DCH resource and has no data transmission, determining, according to the DTX configuration information, the frame number and the subframe number of sending the DPCCH.

With reference to the first aspect and the foregoing implementation manners of the first aspect, in an eighth implementation manner of the first aspect, the sending, by the UE according to the transmission pattern, the DPCCH to a serving base station of the UE includes: sending the DPCCH at a time point that is corresponding to the frame number and the subframe number of sending the DPCCH.

With reference to the first aspect and the foregoing implementation manners of the first aspect, in a ninth implementation manner of the first aspect, the method further includes: sending the DTX capability information of the UE in the non-dedicated connected state to the serving base station by using a random access parameter, where the DTX capability information of the UE in the non-dedicated connected state is used to indicate to the serving base station that the UE supports the DTX in the non-dedicated connected state, and the random access parameter includes at least one of: an access signature, PRACH channelization code, and an access sub-channel.

With reference to the first aspect and the foregoing implementation manners of the first aspect, in a tenth implementation manner of the first aspect, after the receiving, by the UE, discontinuous transmission DTX configuration information sent from a network side, the method further includes: receiving a high speed shared control channel HS-SCCH order sent by the serving base station, so as to activate/deactivate the DTX of the UE in the non-dedicated connected state.

According to a second aspect, a discontinuous transmission method is provided, including: determining, by a network side, discontinuous transmission DTX configuration information; and sending, by the network side, the DTX configuration information to user equipment UE, so that the UE in a non-dedicated connected state discontinuously sends, according to the DTX configuration information, a dedicated physical control channel DPCCH to a serving base station of the UE.

With reference to the second aspect, in a first implementation manner of the second aspect, the method further includes: receiving DTX capability information that is of the UE in the non-dedicated connected state and that is sent by the UE by using radio resource control RRC dedicated signaling; or receiving DTX capability information that is of the UE in a cell-dedicated channel CELL_DCH state and that is sent by the UE by using RRC dedicated signaling, so that the network side adopts the DTX capability information of the UE in the CELL_DCH state as DTX capability information of the UE in the non-dedicated connected state, where the DTX capability information of the UE in the non-dedicated connected state is used to indicate to the network side that the UE supports DTX in the non-dedicated connected state.

With reference to the second aspect and the foregoing implementation manner of the second aspect, in a second implementation manner of the second aspect, the sending, by the network side, the DTX configuration information to the UE includes: sending the DTX configuration information by using system broadcast; or sending the DTX configuration information by using RRC dedicated signaling.

With reference to the second aspect and the foregoing implementation manners of the second aspect, in a third implementation manner of the second aspect, the sending, by the network side, the DTX configuration information to user equipment UE further includes: sending an indication to the UE by using the system broadcast or the RRC dedicated signaling, where the indication is used to indicate that the UE adopts all or a part of DTX configuration information of the UE in a cell-dedicated channel CELL_DCH state; or sending DTX configuration information in a CELL_DCH state to the UE, so that the UE adopts, according to an agreement with the network side, all or a part of the DTX configuration information in the CELL_DCH state as DTX configuration information in the non-dedicated connected state.

With reference to the second aspect and the foregoing implementation manners of the second aspect, in a fourth implementation manner of the second aspect, the DTX configuration information includes: a first DTX cycle; a DPCCH transmission length in the first DTX cycle; and a resource DTX offset parameter that is used to indicate a DTX offset corresponding to a different common enhanced dedicated channel common E-DCH resource configuration.

With reference to the second aspect and the foregoing implementation manners of the second aspect, in a fifth implementation manner of the second aspect, the DTX configuration information may further include: a second DTX cycle; a DPCCH transmission length in the second DTX cycle; and time for starting the second DTX cycle.

With reference to the second aspect and the foregoing implementation manners of the second aspect, in a sixth implementation manner of the second aspect, the method further includes: sending the DTX capability information of the UE in the non-dedicated connected state to the serving base station by using a Frame Protocol, so that the serving base station activates/deactivates the DTX of the UE in the non-dedicated connected state.

According to a third aspect, user equipment is provided, including: a receiving unit, configured to receive discontinuous transmission DTX configuration information sent from a network side; a determining unit, configured to: when the user equipment UE is in a non-dedicated connected state, determine a transmission pattern of a dedicated physical control channel DPCCH according to the DTX configuration information; and a sending unit, configured to send, according to the transmission pattern, the DPCCH to a serving base station of the UE.

With reference to the third aspect, in a first implementation manner of the third aspect, the sending unit is further configured to: send DTX capability information of the UE in the non-dedicated connected state to the network side by using radio resource control RRC dedicated signaling; or send DTX capability information of the UE in a cell-dedicated channel CELL_DCH state to the network side by using RRC dedicated signaling, so that the network side adopts the DTX capability information of the UE in the CELL_DCH state as DTX capability information of the UE in the non-dedicated connected state, where the DTX capability information of the UE in the non-dedicated connected state is used to indicate to the network side that the UE supports DTX in the non-dedicated connected state.

With reference to the third aspect and the foregoing implementation manner of the third aspect, in a second implementation manner of the third aspect, the receiving unit is specifically configured to: receive the DTX configuration information by using system broadcast; or receive the DTX configuration information by using RRC dedicated signaling; or receive and adopt DTX configuration information in a cell-dedicated channel CELL_DCH state.

With reference to the third aspect and the foregoing implementation manners of the third aspect, in a third implementation manner of the third aspect, the sending unit is further specifically configured to: receive an indication that is sent by the network side by using the system broadcast or the RRC dedicated signaling and that is used to indicate that the UE adopts all or a part of the DTX configuration information in the cell-dedicated channel CELL_DCH state; or receive the DTX configuration information in the CELL_DCH state, and adopt, in a manner of an agreement between the network side and the UE, all or a part of the DTX configuration information in the CELL_DCH state as DTX configuration information in the non-dedicated connected state.

With reference to the third aspect and the foregoing implementation manners of the third aspect, in a fourth implementation manner of the third aspect, the DTX configuration information received by the receiving unit includes: a first DTX cycle; a DPCCH transmission length in the first DTX cycle; and a resource DTX offset parameter that is used to indicate a DTX offset corresponding to a different common enhanced dedicated channel common E-DCH resource configuration.

With reference to the third aspect and the foregoing implementation manners of the third aspect, in a fifth implementation manner of the third aspect, the DTX configuration information received by the receiving unit may further include: a second DTX cycle; a DPCCH transmission length in the second DTX cycle; and time for starting the second DTX cycle.

With reference to the third aspect and the foregoing implementation manners of the third aspect, in a sixth implementation manner of the third aspect, the determining unit is specifically configured to: when the UE has no data transmission, determine, according to the DTX configuration information, a frame number and a subframe number of sending the DPCCH.

With reference to the third aspect and the foregoing implementation manners of the third aspect, in a seventh implementation manner of the third aspect, the determining unit is further specifically configured to: when the UE occupies a common E-DCH resource and has no data transmission, determine, according to the DTX configuration information, the frame number and the subframe number of sending the DPCCH.

With reference to the third aspect and the foregoing implementation manners of the third aspect, in an eighth implementation manner of the third aspect, the sending unit is specifically configured to send the DPCCH at a time point that is corresponding to the frame number and the subframe number of sending the DPCCH.

With reference to the third aspect and the foregoing implementation manners of the third aspect, in a ninth implementation manner of the third aspect, the sending unit is further configured to: send the DTX capability information of the UE in the non-dedicated connected state to the serving base station by using a random access parameter, where the DTX capability information of the UE in the non-dedicated connected state is used to indicate to the serving base station that the UE supports the DTX in the non-dedicated connected state, and the random access parameter includes at least one of: an access signature, PRACH channelization code, and an access sub-channel.

With reference to the third aspect and the foregoing implementation manners of the third aspect, in a tenth implementation manner of the third aspect, the receiving unit is further configured to: receive a high speed shared control channel HS-SCCH order sent by the serving base station, so as to activate/deactivate the DTX of the UE in the non-dedicated connected state.

According to a fourth aspect, a network side device is provided, including: a determining unit, configured to determine discontinuous transmission DTX configuration information; and a sending unit, configured to send the DTX configuration information to user equipment UE, so that the UE in a non-dedicated connected state discontinuously sends, according to the DTX configuration information, a dedicated physical control channel DPCCH to a serving base station of the UE.

With reference to the fourth aspect, in a first implementation manner of the fourth aspect, the network side device further includes a receiving unit, where the receiving unit is specifically configured to: receive DTX capability information that is of the UE and that is sent by the UE by using radio resource control RRC dedicated signaling; or receive DTX capability information that is of the UE in a cell-dedicated channel CELL_DCH state and that is sent by the UE by using RRC dedicated signaling, so that the network side adopts the DTX capability information of the UE in the CELL_DCH state as DTX capability information of the UE in the non-dedicated connected state, where the DTX capability information of the UE in the non-dedicated connected state is used to indicate to the network side that the UE supports DTX in the non-dedicated connected state.

With reference to the fourth aspect and the foregoing implementation manner of the fourth aspect, in a second implementation manner of the fourth aspect, the sending unit is specifically configured to: send the DTX configuration information by using system broadcast; or send the DTX configuration information by using RRC dedicated signaling.

With reference to the fourth aspect and the foregoing implementation manners of the fourth aspect, in a third implementation manner of the fourth aspect, the sending unit is further specifically configured to: send an indication to the UE by using the system broadcast or the RRC dedicated signaling, where the indication is used to indicate that the UE adopts all or a part of DTX configuration information in a cell-dedicated channel CELL_DCH state; or send DTX configuration information in the CELL_DCH state to the UE, so that the UE adopts, according to an agreement with the network side, all or a part of the DTX configuration information in the CELL_DCH state as DTX configuration information in the non-dedicated connected state.

With reference to the fourth aspect and the foregoing implementation manners of the fourth aspect, in a fourth implementation manner of the fourth aspect, the DTX configuration information sent by the sending unit includes: a first DTX cycle; a DPCCH transmission length in the first DTX cycle; and a resource DTX offset parameter that is used to indicate a DTX offset corresponding to a different common enhanced dedicated channel common E-DCH resource configuration.

With reference to the fourth aspect and the foregoing implementation manners of the fourth aspect, in a fifth implementation manner of the fourth aspect, the DTX configuration information sent by the sending unit may further include: a second DTX cycle; a DPCCH transmission length in the second DTX cycle; and time for starting the second DTX cycle.

With reference to the fourth aspect and the foregoing implementation manners of the fourth aspect, in a sixth implementation manner of the fourth aspect, the sending unit is further configured to send the DTX capability information of the UE in the non-dedicated connected state to the serving base station by using a Frame Protocol, so that the serving base station activates/deactivates the DTX of the UE in the non-dedicated connected state.

In the embodiments of the present invention, a DPCCH is discontinuously sent in a non-dedicated connected state, so as to reduce uplink interference to another user and improve a system capacity.

**BRIEF DESCRIPTION OF DRAWINGS**

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a flowchart of a discontinuous transmission method according to an embodiment of the present invention;
FIG. 2 is a flowchart of a discontinuous transmission method according to an embodiment of the present invention;
FIG. 3 is an interaction diagram of a discontinuous transmission method according to an embodiment of the present invention;
FIG. 4 is a schematic block diagram of user equipment according to an embodiment of the present invention;
FIG. 5 is a schematic block diagram of a network side device according to an embodiment of the present invention;
FIG. 6 is a schematic block diagram of user equipment according to another embodiment of the present invention; and

FIG. 7 is a schematic block diagram of a network side device according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as: a Global System for Mobile Communications (Global System of Mobile communication, GSM), a Code Division Multiple Access (Code Division Multiple Access, CDMA) system, a Wideband Code Division Multiple Access (Wideband Code Division Multiple Access Wireless, WCDMA) system, a general packet radio service (General Packet Radio Service, GPRS), a Universal Mobile Telecommunications System (Universal Mobile Telecommunications System, UMTS) and a Long Term Evolution (Long Term Evolution, LTE) system.

User equipment (UE, User Equipment), also referred to as a mobile terminal (Mobile Terminal), mobile user equipment, and the like, may communicate with one or more core networks by using a radio access network (for example, RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges language and/or data with the radio access network.

A base station may be a base station (BTS, Base Transceiver Station) in GSM or CDMA, may be a base station (NodeB) in WCDMA, or may be an evolved NodeB (eNB or e-NodeB, evolutional Node B) in LTE, and the like.

A network side device may be a radio network controller (RNC, Radio Network Controller) in the UMTS, may be a general term of the RNC and a base station, or may be a device like an eNB in the LTE, a base station controller (BSC, Base Station Controller) in the GSM, which is not limited in the present invention.

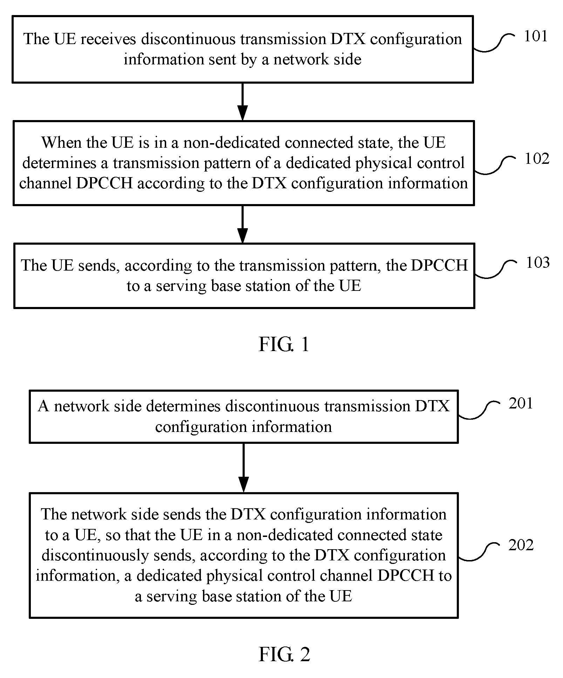

FIG. 1 is a flowchart of a discontinuous transmission method according to an embodiment of the present invention. The method in FIG. 1 is executed by UE.

101. The user equipment UE receives discontinuous transmission DTX configuration information sent from a network side.

102. When the UE is in a non-dedicated connected state, the UE determines a transmission pattern of a dedicated physical control channel DPCCH according to the DTX configuration information.

103. The UE sends, according to the transmission pattern, the DPCCH to a serving base station of the UE.

In this embodiment of the present invention, the DPCCH is discontinuously sent in the non-dedicated connected state, so as to reduce uplink interference to another user and improve a system capacity.

The non-dedicated connected state is relative to a CELL_DCH state and may include a CELL_FACH state, a CELL_PCH state, a URA_PCH state, an idle (idle) state, and the like. This embodiment of the present invention is described by using the CELL_FACH as an example.

Optionally, in an embodiment, before step 102, the method may further include: sending DTX capability information of the UE in a non-dedicated connected state to the network side by using radio resource control RRC dedicated signaling; or sending DTX capability information of the UE in a cell-dedicated channel CELL_DCH state to the network side by using RRC dedicated signaling, so that the network side adopts the DTX capability information of the UE in the CELL_DCH state as DTX capability information of the UE in a non-dedicated connected state, where the DTX capability information of the UE in the non-dedicated connected state is used to indicate to the network side that the UE supports DTX in the non-dedicated connected state. That is, the UE may report, before step 101 or after step 101, the DTX capability information in the non-dedicated connected state.

Specifically, a process in which the UE sends the DTX capability information to the network side may be that the UE reports the DTX capability information to the network side by using the radio resource control RRC dedicated signaling.

For example, the RRC dedicated signaling that is used to report the DTX capability information may be signaling such as RRC connection setup complete (RRC connection setup complete), a cell update (Cell Update), a UTRAN registration area update (UTRAN Registration Area Update, URA update), and an RRC connection request (RRC connection request).

Further, the DTX capability information of the UE in the CELL_DCH state can also be adopted as a capability indication in the non-dedicated connected state, for example, DTX capability information in the CELL_FACH state, that is, the DTX capability information can be reported to the network side by using signaling that indicates that the UE supports DTX in the cell-dedicated channel CELL_DCH state. That is, so long as the UE that supports the DTX in the non-dedicated connected state reports DPCCH Discontinuous Transmission support (the IE is an indication that is currently used to indicate that the UE supports the CELL_DCH DTX), it represents that the UE supports both the DTX in the non-dedicated connected state and DTX in a dedicated connected state.

Further, version information of the UE also needs to be reported when the DTX capability information is reported to the network side by using the signaling that indicates that the UE supports the DTX in the cell-dedicated channel CELL_DCH state. If the UE supports the DTX in the CELL_DCH state and the UE also supports a common E-DCH, whether the UE supports DTX in the CELL_FACH state can be determined according to the version information of the UE. In this case, a same information element (Information Element, IE) can be used to report capability information that indicates that the UE supports the DTX in the CELL_FACH state and capability information that indicates that the UE supports the DTX in the CELL_DCH state.

Optionally, in an embodiment, step 101 may include: receiving the DTX configuration information by using system broadcast; or receiving the DTX configuration information by using RRC dedicated signaling; or receiving and adopting DTX configuration information in the CELL_DCH state.

The receiving and adopting the DTX configuration information in the CELL_DCH state includes: receiving, by the UE, an indication that is sent by the network side by using the system broadcast or the RRC dedicated signaling and that is used to indicate that the UE adopts all or a part of the DTX configuration information in the cell-dedicated channel CELL_DCH state; or receiving, by the UE, the DTX configuration information in the CELL_DCH state, and adopts, in a manner of an agreement between the network side and the UE, all or a part of the DTX configuration information in the CELL_DCH state as the DTX configuration information in the non-dedicated connected state.

The DTX configuration information in the CELL_DCH state may be received by the UE before the UE changes from the CELL_DCH state to the non-dedicated connected state, and then stored in the UE. After the UE is changed into the non-dedicated connected state, the UE may directly adopt the DTX configuration information.

Specifically, the network side may write the DTX configuration information into a system information block (System Information Block, SIB), and then send the DTX configuration information to the UE in a manner of system broadcast. Alternatively, the DTX configuration information may be carried in RRC dedicated signaling, for example, a cell update confirm (Cell Update Confirm), a physical channel reconfiguration (Physical Channel Reconfiguration), a radio bearer reconfiguration (Radio Bearer Reconfiguration), or a Radio Bearer Setup. Further, an adoption instruction delivered by the network side may also be included in the system broadcast message or the RRC dedicated signaling, or an agreement may be made, so that the UE adopts the DTX configuration information in the CELL_DCH state as DTX configuration information in the CELL_FACH state.

Optionally, in an embodiment, the DTX configuration information may include: a first DTX cycle (UE DTX cycle 1); a DPCCH transmission length in the first DTX cycle (UE DPCCH burst_1); and a resource DTX offset parameter (Resource DTX offset) that is used to indicate a DTX offset corresponding to a different common enhanced dedicated channel common E-DCH resource configuration. A DTX parameter with one cycle is configured in the foregoing configuration information, where a common E-DCH resource is configured in the SIB, currently one cell can be configured with a maximum of 32 sets of resources, and each set of resource is corresponding to a resource DTX offset parameter. That is, the UE that obtains a different resource staggers time of discontinuous transmission, so that power of different users is evenly distributed in a time domain, so as to further reduce uplink interference and increase a quantity of users, thereby further improving the system capacity.

Optionally, in an embodiment, the DTX configuration information may further include the following parameters: a second DTX cycle (UE DTX cycle 2); a DPCCH transmission length (UE DPCCH burst_2) in the second DTX cycle; and time (Inactivity Threshold for UE DTX cycle 2) for starting the second DTX cycle. These parameters are used to configure the second DTX cycle, so that a sending cycle can be changed after the discontinuous transmission is implemented for a certain period of time. If the second cycle is an integral multiple of the first cycle, the UE sends the DPCCH for a period of time according to the first DTX cycle, and then sends the DPCCH according to the longer second DTX cycle, so as to further reduce the uplink interference.

In addition, the DTX configuration information may further include some other parameters, for example, a DTX cycle (MAC DTX cycle) of a Media Access Control MAC layer, a threshold (MAC Inactivity Threshold) at which the UE enters MAC DTX, and time (UE DTX long preamble length) of sending the DPCCH in advance when the UE has data that needs to be sent.

Optionally, in an embodiment, step 102 includes: when the UE occupies the common E-DCH resource and has no data transmission, determining, according to the DTX configuration information, a frame number and a subframe number of sending the DPCCH; and sending the DPCCH at a time point that is corresponding to the frame number and the subframe number of sending the DPCCH. Specifically, when the UE in the CELL_FACH state has uplink data to be transmitted, the UE needs to compete for the common E-DCH resource and uses the resource to send the uplink data. In an intermittent period of time of sending data or in a period of time after sending of the data is completed, a data channel E-DPDCH is no longer sent, but the control channel DPCCH is continuously sent. In this case, the UE needs to calculate, by using the following formula, the transmission pattern (Pattern) of the DPCCH, that is, a series of sending time points for discontinuously sending the DPCCH:

$$((5 * CFN - DTX\_Offset + S)\ MOD\ DTX\_cycle) = 0$$

CFN represents a connection frame number (Connection Frame Number), and S represents a subframe number in a connection frame. DTX_cycle and DTX_offset may be the first DTX cycle and the resource DTX offset that are in the DTX configuration information in the foregoing embodiment, and MOD represents a modulo operation. The series of the sending time points can be calculated by using the foregoing formula, so as to form the transmission pattern of the DPCCH. Still further, the UE may also use two cycles to calculate a transmission pattern of the DPCCH and still uses the foregoing formula, where DTX_cycle represents the second DTX cycle in the DTX configuration information in the foregoing embodiment.

Optionally, in an embodiment, the foregoing method may further include: sending, by the UE, the DTX capability information of the UE in the non-dedicated connected state to the serving base station by using a random access parameter, where the DTX capability information of the UE in the non-dedicated connected state is used to indicate to the serving base station that the UE supports the DTX in the non-dedicated connected state, and the random access parameter includes at least one of: an access signature, physical random access channel PRACH channelization code, and an access sub-channel. In addition, the RNC may also notify the serving base station of the DTX capability information of the UE. Preferably, after the RNC obtains the capability information that indicates that the UE supports the DTX in the non-dedicated connected state, the RNC can indicate, by using an HS-DSCH DATA FRAME, to a NodeB that the UE supports the DTX in the non-dedicated connected state.

Further, the UE receives a high speed shared control channel HS-SCCH order sent by the serving base station, so as to activate/deactivate the DTX of the UE in the non-dedicated connected state.

The serving base station of the UE can control activation and deactivation of the DTX of the UE. Specifically, the serving base station first needs to obtain the DTX capability information of the UE, and then can deliver an activation/deactivation indication to the UE that supports the capability. When the UE is in a random access procedure, the UE may indicates, by using the random access parameter, whether the UE supports the CELL_FACH DTX, or because the UE can report the DTX capability information to the network side in the foregoing embodiment, the RNC of the network side can notify, in a Frame Protocol (Frame Protocol, FP), the serving base station of information that the UE supports the CELL_FACH DTX. Then, the serving base station may perform, by using the HS-SCCH order, an activation/deactivation control on the DTX of the UE. Still further, the serving base station may use a single-to-single manner to activate/deactivate the CELL_FACH DTX of the UE, and the serving base station may also use a grouping manner to implement the activation/deactivation, or performs the activation/deactivation in a unit of an entire cell on the CELL_FACH DTX. Further, when the base station activates/deactivates DTX of a user of the entire cell, the base station may use a public cell user identifier to mask the HS-SCCH. The public cell user identifier is sent in a system broadcast message, where the identifier may be specifically an H-RNTI, an E-RNTI, and the like. When the serving base station performs the activation/deactivation on the CELL_FACH DTX by using the grouping manner or in the unit of the entire cell, optionally, the serving base station does not need to obtain the capability information that indicates that the UE supports the CELL_FACH DTX.

In this embodiment of the present invention, a DPCCH is discontinuously sent in a non-dedicated connected state, so as to reduce uplink interference to another user and improve a system capacity. In addition, each set of resource is corresponding to a resource DTX offset parameter, so that power of different users is evenly distributed in a time domain, so as to further reduce the uplink interference and increase a quantity of users, thereby further improving the system capacity.

FIG. 2 is a flowchart of a discontinuous transmission method according to an embodiment of the present invention. The method in FIG. 2 is executed by a network side. It should be understood that the network side is relative to UE. The network side may be an RNC, may be a general term of the RNC and a base station, or may be an eNB in the LTE, a BSC in the GSM, and the like, which is not limited in the present invention. In this embodiment of the present invention, configuration and the like of DTX are mainly performed by the RNC, and the configuration of the DTX is delivered to the UE by using a base station. For convenience of description, the RNC is used to represent the network side for description in the following.

201. The network side determines discontinuous transmission DTX configuration information.

202. The network side sends the DTX configuration information to user equipment UE, so that the UE in a non-dedicated connected state discontinuously sends, according to the DTX configuration information, a dedicated physical control channel DPCCH to a serving base station of the UE.

In this embodiment of the present invention, the network side device configures the UE, so that the UE in the non-dedicated connected state discontinuously sends the DPCCH, so as to reduce uplink interference to another user and improve a system capacity.

Optionally, in an embodiment, before or after step 201, the method may further include: receiving DTX capability information that is of the UE in the non-dedicated connected state and that is sent by the UE by using radio resource control RRC dedicated signaling; or receiving DTX capability information that is of the UE in a cell-dedicated channel CELL_DCH state and that is sent by the UE by using RRC dedicated signaling, so that the network side adopts the DTX capability information of the UE in the CELL_DCH state as DTX capability information of the UE in the non-dedicated connected state, where the DTX capability information of the UE in the non-dedicated connected state is used to indicate to the network side that the UE supports DTX in the non-dedicated connected state.

Specifically, the RRC dedicated signaling that is used to report the DTX capability information may be signaling such as an RRC connection setup complete, a cell update, a URA update, and an RRC connection request.

Further, the DTX capability information of the UE in the CELL_DCH state can also be adopted as a DTX capability indication in the non-dedicated connected state, for example, DTX capability information in the CELL_FACH state, that is, the DTX capability information can be reported to the network side by using signaling that indicates that the UE supports DTX in the cell-dedicated channel CELL_DCH state. That is, so long as the UE that supports the DTX in the non-dedicated connected state reports DPCCH Discontinuous Transmission support (the IE is an indication that is currently used to indicate that the UE supports the CELL_DCH DTX), it represents that the UE supports both the DTX in the non-dedicated connected state and DTX in a dedicated connected state.

Further, version information of the UE is also needed to report the DTX capability information to the network side by using the signaling that indicates that the UE supports the DTX in the cell-dedicated channel CELL_DCH state. If the UE supports the DTX in the CELL_DCH state and the UE also supports a common E-DCH, whether the UE supports DTX in the CELL_FACH state can be determined according to the version information of the UE. In this case, a same information element (Information Element, IE) can be used to report capability information that indicates that the UE supports the DTX in the CELL_FACH state and capability information that indicates that the UE supports the DTX in the CELL_DCH state.

Optionally, in an embodiment, step 202 may include: sending the DTX configuration information by using system broadcast; or sending the DTX configuration information by using the RRC dedicated signaling. Specifically, the RNC may write the DTX configuration information into a SIB, and then sends the DTX configuration information to the UE in a manner of system broadcast. Alternatively, the DTX configuration information may be carried in RRC dedicated signaling, for example, a cell update confirm, a physical channel reconfiguration, a radio bearer reconfiguration, or a radio bearer setup. Further, the RNC may also deliver an adoption instruction, or an agreement may be made, so that the UE adopts DTX configuration information in the CELL_DCH state as DTX configuration information in the CELL_FACH state.

Optionally, in an embodiment, step 201 may further include: sending an indication to the UE by using the system broadcast or the RRC dedicated signaling, where the indication is used to indicate that the UE adopts all or a part of the DTX configuration information in the cell-dedicated channel CELL_DCH state; or sending the DTX configuration information in the CELL_DCH state to the UE, so that the UE adopts, according to an agreement with the network side, all or a part of the DTX configuration information in the CELL_DCH state as the DTX configuration information in the non-dedicated connected state.

The DTX configuration information in the CELL_DCH state may be received by the UE before the UE changes from the CELL_DCH state to the non-dedicated connected state, and then stored in the UE. After the UE is changed into the non-dedicated connected state, the UE may directly adopt the DTX configuration information.

Optionally, in an embodiment, the DTX configuration information may include: a first DTX cycle; a DPCCH transmission length in the first DTX cycle; and a resource DTX offset parameter that is used to indicate a DTX offset corresponding to a different common enhanced dedicated channel common E-DCH resource configuration. A DTX parameter with one cycle is configured in the foregoing configuration information, where a common E-DCH resource is configured in the SIB, currently one cell can be configured with a maximum of 32 sets of resources, and each set of resource is corresponding to a resource DTX offset parameter. That is, the UE that obtains a different resource staggers time of discontinuous transmission, so that power of different users is evenly distributed in a time domain, so as to further reduce uplink interference and increase a quantity of users, thereby further improving the system capacity.

Optionally, in an embodiment, the DTX configuration information may further include the following parameters: a second DTX cycle; a DPCCH transmission length in the second DTX cycle; and time for starting the second DTX cycle. These parameters are used to configure the second DTX cycle, so that a sending cycle can be changed in the discontinuous transmission after a particular time. If the second cycle is an integral multiple of the first cycle, the UE sends the DPCCH for a period of time according to the first DTX cycle, and then sends the DPCCH according to the longer second DTX cycle, so as to further reduce the uplink interference.

In addition, the DTX configuration information may further include some other parameters, for example, a DTX cycle of a Media Access Control MAC layer, a threshold at which the UE enters MAC DTX, and time of sending the DPCCH in advance when the UE has data that needs to be sent.

Optionally, in an embodiment, the method further includes: sending the DTX capability information of the UE in the non-dedicated connected state to the serving base station by using a Frame Protocol, so that the serving base station activates/deactivates the DTX of the UE in the non-dedicated connected state. Specifically, the RNC may carry the DTX capability information of the UE in the CELL_FACH state in a High Speed Downlink Shared Channel data frame type HS-DSCH DATA Frame Type 2 or 3 to notify the serving base station of the DTX capability information, so that the serving base station can deliver, according to the DTX capability information, an activation/deactivation instruction to the UE that supports the DTX in the non-dedicated connected state.

In this embodiment of the present invention, a DPCCH is discontinuously sent in a non-dedicated connected state, so as to reduce uplink interference to another user and improve a system capacity. In addition, each set of resource is corresponding to a resource DTX offset parameter, so that power of different users is evenly distributed in a time domain, so as to further reduce the uplink interference and increase a quantity of users, thereby further improving the system capacity.

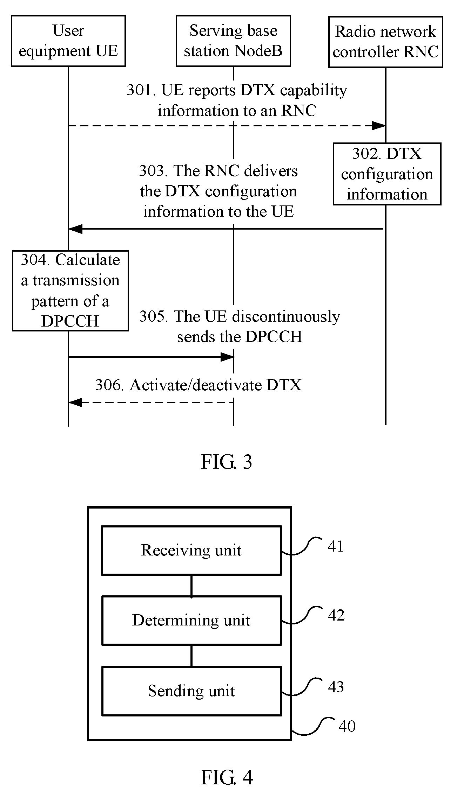

FIG. 3 is an interaction diagram of a discontinuous transmission method according to an embodiment of the present invention.

301. UE reports DTX capability information to an RNC.

First, the UE needs to report the capability information that indicates whether the UE supports DTX in a CELL_FACH state to a network side. This embodiment of the present invention mainly relates to a case in which the UE supports the DTX in the CELL_FACH state. Specifically, the UE may report the DTX capability information in the following manners:

Manner 1: The UE may report the DTX capability information to the RNC by using RRC dedicated signaling that includes the DTX capability information. For example, the dedicated signaling may be an RRC connection setup complete, a cell update, a URA update, or an RRC connection request. Still further, the DTX capability information may be included in a physical channel capability (Physical Channel Capability) information element IE. For example, the IE may be specifically: a cell-forward access channel dedicated physical control channel discontinuous transmission support (CELL_FACH DPCCH DTX Support, Support of CELL_FACH DTX, or the like). A specific format of the IE may be as follows:

| >>> CELL_FACH DPCCH DTX Support (whether to support discontinuous transmission of a DPCCH in a CELL_FACH state) | OP (option) | | Enumerated (TRUE) (a format of this IE) | The absence of this IE indicates that the UE does not support CELL_FACH DPCCH DTX (a description of the IE: an absence of the IE represents that the IE does not support CELL_FACH DPCCH DTX) | REL-x (a version in which the capacity is introduced) |

Manner 2: A same IE is used to report capability information that indicates that the UE supports the DTX in the CELL_FACH state and capability information that indicates that the UE supports DTX in a CELL_DCH state, that is, the DTX capability information in the CELL_FACH state is reported to the network side by using the signaling that indicates that the UE supports the DTX in the CELL_FACH state. Specifically, the UE reports the DTX capability information that indicates that the UE supports the DTX in the CELL_DCH state. In addition, it is considered that if the UE supports the DTX in the CELL_DCH state, the UE may also support the DTX in the CELL_FACH state, so that the UE does not need to report the capability information. Currently, a manner in which the UE reports supporting of the DTX in the CELL_DCH state is as follows:

| >>> DPCCH DTX Support (whether to support discontinuous transmission of a DPCCH) | O P (option) | | Enum erated (TRUE) (a format of this IE) | The absence of this IE indicates that the UE does not support DPCCH DTX (a description of the IE: an absence of the IE represents that the IE does not support this capability) | REL-7 (a version in which this capability is introduced) |

The foregoing method requires support from version information of the UE. If the UE supports the DTX in the CELL_DCH state, the UE also supports a common E-DCH, and an obtained UE version is a version in which the CELL_FACH DTX is introduced for the first time or a later version, the network side determines that the UE also supports the DTX in the CELL_FACH state. For example, only UE later than a Rel12 supports the CELL_FACH DTX. That is, if the network side learns that the UE supports the DTX in the CELL_DCH state, the UE supports the common E-DCH, and the version information that is of the UE and obtained by the network side indicates that the UE is Re112 or later, the network side determines that the UE also supports the DTX in the CELL_FACH state. Specifically, the version of the foregoing UE represents a version that the UE implements the feature, where a corresponding version to a protocol represents a corresponding protocol version after CELL_FACH DTX is introduced in a standard. Currently, the UE reports the version information to the network side, for example, Re111 or Re112. The corresponding UE to the implementation represents the UE that actually uses the feature.

It should be understood that generally, the UE preferably reports the DTX capability information when a system information update is needed in cases such as network access, a state switchover, and a cell handover/reselection. However, an execution sequence of step 301 is not limited thereto. The UE can flexibly report the DTX capability information at any time; or the network side may deliver a report instruction of the DTX capability information, and, when receiving the report instruction, the UE reports the DTX capability information. In addition, in a process in which the UE reports the DTX capability information to the network side, the serving base station of the UE needs to forward the DTX capability information.

In addition, the serving base station of the UE may also report DTX capability information to the RNC, where the DTX capability information indicates that the UE supports DTX in a CELL_FACH state. Specifically, the serving base station may report capability information to the RNC by including the DTX capability information in an audit (Audit) response or resource status indication (Resource Status Indication) signaling. The DTX capability information of the serving base station reflects whether a cell served by the base station or the base station supports the DTX in the CELL_FACH state. Similar to the process in which the UE reports the DTX capability information, time for reporting the DTX capability information by the serving base station may also be very flexibly set

302. DTX configuration information

Specific parameters of the DTX configuration information may include a first DTX cycle, a DPCCH length in the first DTX cycle, and a resource DTX offset, where the resource DTX offset is set according to a different resource configuration. For example,

a UE DTX cycle 1 (a first DTX cycle of the UE),
a UE DPCCH burst 1 (a DPCCH transmission length in the first DTX cycle of the UE), and
a Resource DTX offset (resource DTX offset).

A most basic DTX transmission cycle pattern is configured by using the foregoing three items, where the Resource DTX offset needs to be configured according to a different resource. Specifically, the common E-DCH resource used in the CELL_FACH state is configured in a SIB. Currently one cell can be configured with a maximum of 32 sets of resources. When the UE needs to send uplink data, the UE needs to compete for a resource. If a different Resource DTX offset is preferably configured according to a different resource, a DTX offset corresponding to a different resource competed by a different UE is also different. That is, the UE that obtains a different resource staggers time of discontinuous transmission, so that power of different users is evenly distributed in a time domain, so as to further reduce uplink interference and increase a quantity of users, thereby further improving a system capacity.

Optionally, the DTX configuration information may further include some other parameters to further enhance a function and reliability of the DTX. For example, the network side may further configure the following parameters:

a UE DTX long preamble length (time of sending the DPCCH in advance); when the UE has uplink data that needs to be sent, the UE needs to start to send, in several timeslots before an E-DPCCH needs to be transmitted, the DPCCH to adjust the power, and the parameter is used to set the time of sending in advance, where a unit of the parameter may be a time unit, a quantity of the timeslots, or the like, which is not limited in the present invention;
a MAC DTX cycle (a cycle that is used for discontinuous transmission the MAC layer). The RNC can restrict, by configuring the MAC DTX cycle, the UE from sending the E-DCH, so as to implement uplink discontinuous transmission of the DPCCH;
a MAC Inactivity Threshold (a threshold at which the UE enters the MAC DTX); and
a CQI DTX Timer (a priority of a CQI is higher than that of the DTX; the parameter represents time of discontinuous transmission by the CQI).

When the network side configures two DTX cycles, the DTX configuration information may further include the following parameters:

a UE DTX cycle 2 (a second DTX cycle of the UE);
a UE DPCCH burst 2 (a data transmission length in the second DTX cycle of the UE);
a Default SG in DTX Cycle 2 (authorization used for sending of the uplink data); and
an Inactivity Threshold for UE DTX cycle 2 (time at which the UE enters the cycle 2).

Configuring the second DTX cycle parameter enables the UE to send the DPCCH according to the second DTX cycle after the UE sends the DPCCH for a period of time according to the first DTX cycle, so as to further reduce the uplink interference in a stepwise manner by configuring the longer second DTX cycle.

303. The RNC delivers the DTX configuration information to the UE.

The RNC delivers the DTX configuration information to the UE after receiving the DTX capability information that is reported by the UE in step 301, or according to a preset cycle. Specifically, the RNC may deliver the DTX configuration information to the UE by using system broadcast or RRC dedicated signaling.

The RNC may write the parameters in step 302 into a system information SIB, and delivers the DTX configuration information by using a system broadcast SIB. Preferably, the RNC may deliver the configuration information in a SIB5.

The RNC delivers a CELL_FACH DTX parameter (DTX configuration information) by using RRC dedicated signaling, where the dedicated signaling may be an RRC message, for example, a Cell Update Confirm (cell update confirm), a Physical Channel Reconfiguration (physical channel reconfiguration), a Radio Bearer Reconfiguration (radio bearer reconfiguration), a Radio Bearer Release (radio bearer release), a Radio Bearer Setup (radio bearer setup), an RRC Connection Setup (RRC connection request), or a Transport Channel Reconfiguration (transport channel reconfiguration).

In addition, the network side may deliver an adoption instruction, or an agreement may be made, so that the UE adopts a part or all of the existing DTX configuration information in the CELL_DCH state as DTX configuration information in the CELL_FACH state.

It should be understood that in a process in which the network side delivers the DTX configuration information to the UE, the serving base station needs to forward the DTX configuration information.

In addition, the network side also needs to deliver the DTX configuration information to the serving base station. Specifically, the RNC may deliver the DTX configuration information carried in a Physical Shared Channel Reconfiguration Request (physical shared channel reconfiguration request) message to the base station. Further, the network side may also send an indication information to instruct the NodeB to adopt the DTX configuration information of the user equipment in a dedicated connected state, where the indication information may be provided in a manner of an agreement, or may be provided in a manner of delivering an adoption instruction by the RNC.

304. The UE calculates a transmission pattern of the DPCCH.

Optionally, when the UE has the uplink data that needs to be sent, the UE needs to start to send, in several slots before the E-DPCCH needs to be transmitted, the DPCCH to adjust the power, and the time of sending in advance is configured in the UE DTX long preamble length in the foregoing step 302, or the time of sending in advance may be agreed upon, for example, starting to send the DPCCH two slots in advance. Generally, after sending of the uplink data is completed, the UE continues to send a DPCCH with one slot to adjust the power again.

In a period of time when a timer is running, the UE has no unlink data to be sent, but the control channel DPCCH still is continuously sent. To reduce interference of the DPCCH to another user, a manner of discontinuous transmission is used, so that when the UE has no data transmission, the UE uses the following formula to calculate a series of time points (that is, the transmission pattern (pattern) of the DPCCH) at which the DPCCH needs to be sent:

$$((5 * \text{CFN} - \text{DTX\_Offset} + S) \text{ MOD DTX\_cycle}) = 0$$

CFN represents a connection frame number (Connection Frame Number), and S represents a subframe number in a connection frame. DTX cycle and DTX _offset may be the first DTX cycle and the resource DTX offset that are in the DTX configuration information in the foregoing embodiment, and MOD represents a modulo operation. The series of the sending time points can be calculated by using the foregoing formula, so as to form the transmission pattern of the DPCCH. Still further, the UE may also use two cycles to calculate a transmission pattern of the DPCCH and still uses the foregoing formula, where DTX_cycle represents the second DTX cycle in the DTX configuration information in the foregoing embodiment. When the UE has no data transmission, the UE first uses the first DTX cycle (UE DTX cycle1) to calculate a transmission pattern of the DPCCH. After a period of time (Inactivity Threshold for UE DTX_cycle2), the UE starts to use the second DTX cycle (UE DTX cycle 2) to calculate a transmission pattern of the DPCCH. The formula that the UE uses to calculate the time points for sending the DPCCH is similar to the formula that is used to calculate the foregoing first DTX cycle. A difference between the two formulas is that parameters corresponding to the formulas are different. The network side configures a different parameter, such as the Resource DTX_Offset, according to a different cycle of the UE and a different resource configuration to enable that the power of different UEs is distributed as evenly as possible in a time domain, so as to achieve a purpose of reducing the unlink interference.

305. The UE discontinuously sends the DPCCH.

When the UE has uplink data to be transmitted, the UE competes for the common E-DCH resource and uses the resource to send the uplink data. If the network side configures the UE to use a manner of implicit resource release, after the data transmission is completed, the UE starts an implicit resource release timer. In a period in which the implicit resource release timer runs, if the UE has uplink data to be sent, the UE stops the timer, waits until sending of the data is completed, and restarts the timer. If the UE receives downlink data in the period in which the implicit resource release timer runs, the UE restarts the timer.

After the UE enters a DTX state, if the UE has uplink data that needs to be sent, the UE needs to start to send, in several slots before the E-DPCCH needs to be transmitted, the DPCCH to adjust the power. The time of sending in advance is determined according to the UE DTX long preamble length in the received DTX configuration information, or the time of sending in advance may be agreed upon, for example, starting to send the DPCCH two slots in advance. Generally, after sending of the uplink data is completed, the UE continues to send a DPCCH with one slot to adjust the power again. After that, when the UE has no data that needs to be transmitted, a control signal, such as a power control signal and a pilot signal, of the DPCCH is sent according to the series of sending time points that are in the transmission pattern of the DPCCH and obtained by means of calculation in the foregoing step 304. After the resource release timer expires, the obtained resource is released for another user to use.

Further, when the network side configures the UE to use an implicit resource release timer to perform resource release, the UE starts to calculate, when the implicit resource release timer starts, the transmission pattern of the DPCCH and starts to discontinuously send the DPCCH.

Further, when the network side configures the UE to use an explicit resource release manner to perform resource release, the UE starts to calculate, when the UE has no data to be sent, the transmission pattern of the DPCCH and starts to discontinuously send the DPCCH.

306. Activate/deactivate DTX.

When the UE that supports the DTX in the CELL_FACH state obtains the common E-DCH resource, or when the UE receives the DTX configuration information in the CELL_FACH state, it is considered that the CELL_FACH DTX is activated. However, in an actual application, enabling and disabling of a DTX function of the UE may need to be flexibly controlled. In this case, the serving base station of the UE may activate/deactivate the DTX of the UE according to an HS-SCCH order. Because the base station needs to implement activation/deactivation for the UE that supports a DTX capability, a relative execution sequence of step 306 may be: executing step 306 after the base station obtains the DTX capability information in the foregoing step 301. Similar to step 301, an absolute execution sequence of step 306 is not limited in the present invention.

It should be noted that a DTX configuration procedure that is of the non-dedicated connected state and corresponding to this embodiment of the present invention is also applicable to a discontinuous reception DRX feature in the non-dedicated connected state.

In this embodiment of the present invention, a DPCCH is discontinuously sent in a non-dedicated connected state, so as to reduce uplink interference to another user and improve a system capacity. In addition, each set of resource is corresponding to a resource DTX offset parameter, so that power of different users is evenly distributed in a time domain, so as to further reduce the uplink interference and increase a quantity of users, thereby further improving the system capacity.

FIG. 4 is a schematic block diagram of user equipment according to an embodiment of the present invention. The user equipment 40 in FIG. 4 includes a receiving unit 41, a determining unit 42, and a sending unit 43.

The receiving unit 41 receives discontinuous transmission DTX configuration information sent from a network side. When the user equipment 40 is in a non-dedicated connected state, the determining unit 42 determines a transmission pattern of a dedicated physical control channel DPCCH according to the DTX configuration information. The sending unit 43 sends, according to the transmission pattern, the DPCCH to a serving base station of the user equipment 40.

In this embodiment of the present invention, the DPCCH is discontinuously sent in the non-dedicated connected state, so as to reduce uplink interference of the user equipment 40 to another user and improve a system capacity.

Optionally, in an embodiment, the sending unit 41 is further configured to send DTX capability information of the user equipment 40 in the non-dedicated connected state to the network side by using radio resource control RRC dedicated signaling; or send DTX capability information of the user equipment 40 in a cell-dedicated channel CELL_DCH state to the network side by using RRC dedicated signaling, so that the network side adopts the DTX capability information of the user equipment 40 in the CELL_DCH state as DTX capability information of the user equipment 40 in the non-dedicated connected state, where the DTX capability information of the user equipment 40 in the non-dedicated connected state is used to indicate to the network side that the user equipment 40 supports DTX in the non-dedicated connected state.

Specifically, a process in which the user equipment 40 sends the DTX capability information to the network side may be that the user equipment 40 reports the DTX capability information to the network side by using the radio resource control RRC dedicated signaling.

For example, the RRC dedicated signaling that is used to report the DTX capability information may be signaling such as an RRC connection setup complete (RRC connection setup complete), a cell update (Cell Update), a UTRAN registration area update (UTRAN Registration Area Update, URA update), and an RRC connection request (RRC connection request).

Further, the DTX capability information of the user equipment 40 in the CELL_DCH state can also be adopted as the non-dedicated connected state, for example, DTX capability information in the CELL_FACH state, that is, the DTX capability information can be reported to the network side by using signaling that indicates that the user equipment 40 supports DTX in the cell-dedicated channel CELL_DCH state. That is, so long as the user equipment 40 that supports the DTX in the non-dedicated connected state reports DPCCH Discontinuous Transmission support (an indication that indicates that the user equipment 40 currently supports the CELL_DCH DTX), it represents that the user equipment 40 supports the DTX in the non-dedicated connected state and DTX in a dedicated connected state.

Further, version information of the user equipment 40 also needs to be reported when the DTX capability information is reported to the network side by using the signaling that indicates that the user equipment 40 supports the DTX in the cell-dedicated channel CELL_DCH state. If the user equipment 40 supports the DTX in the CELL_DCH state and the UE also supports a common E-DCH, whether the user equipment 40 supports DTX in the CELL_FACH state can be determined according to the version information of the user equipment 40. In this case, a same information element (Information Element, IE) can be used to report capability information that indicates that the user equipment 40 supports the DTX in the CELL_FACH state and capability information that indicates that the user equipment 40 supports the DTX in the CELL_DCH state.

Optionally, in an embodiment, the receiving unit 43 is specifically configured to receive the DTX configuration information by using system broadcast; or receive the DTX configuration information by using the RRC dedicated signaling; or receive and adopt DTX configuration information in the cell-dedicated channel CELL_DCH state.

Specifically, the network side may write the DTX configuration information into a system information block (System Information Block, SIB), and then sends the DTX configuration information to the user equipment 40 in a manner of system broadcast. Alternatively, the DTX configuration information may be carried in RRC dedicated signaling, for example, a cell update confirm (Cell Update Confirm), a physical channel reconfiguration (Physical Channel Reconfiguration), a radio bearer reconfiguration (Radio Bearer Reconfiguration), or a Radio Bearer Setup. Further, the network side may deliver an adoption instruction, or an agreement may be made, so that the user equipment 40 adopts the DTX configuration information in the CELL_DCH state as DTX configuration information in the CELL_FACH state.

Optionally, in an embodiment, the DTX configuration information received by the receiving unit 41 includes: a first DTX cycle; a DPCCH transmission length in the first DTX cycle; and a resource DTX offset parameter that is used to indicate a DTX offset corresponding to a different common enhanced dedicated channel common E-DCH resource configuration. The DTX configuration information may further include: a second DTX cycle; a DPCCH length in the second DTX cycle; and time for starting the second DTX cycle.

Optionally, in an embodiment, the determining unit 42 is specifically configured to: when the user equipment 40 occupies a common E-DCH resource and has no data transmission, determine a frame number of a present frame and a quantity of subframes included in the present frame; and determine, according to the frame number, the quantity of the subframes, and the DTX configuration information, a discontinuous time resource occupied for sending the DPCCH.

Optionally, in an embodiment, the sending unit 43 is further configured to send the DTX capability information of the user equipment 40 in the non-dedicated connected state to the serving base station by using a random access parameter, where the DTX capability information of the user equipment 40 in the non-dedicated connected state is used to indicate to the serving base station that the user equipment 40 supports the DTX in the non-dedicated connected state, and the random access parameter includes at least one of: an access signature, physical random access channel PRACH channelization code, and an access sub-channel. In addition, an RNC may also notify the serving base station of the DTX capability information of the user equipment 40. Preferably, after the RNC obtains the capability information that indicates that the user equipment 40 supports the DTX in the non-dedicated connected state, the RNC can indicate, by using an HS-DSCH DATA FRAME, to a NodeB that the user equipment 40 supports the DTX in the non-dedicated connected state.

Optionally, in an embodiment, the receiving unit 41 is further configured to receive a high speed shared control channel HS-SCCH order sent by the serving base station, so as to activate/deactivate the DTX of the user equipment 40 in the non-dedicated connected state.

In this embodiment of the present invention, a DPCCH is discontinuously sent in a non-dedicated connected state, so as to reduce uplink interference to another user and improve a system capacity. In addition, each set of resource is corresponding to a resource DTX offset parameter, so that power of different users is evenly distributed in a time domain, so as to further reduce the uplink interference and increase a quantity of users, thereby further improving the system capacity.

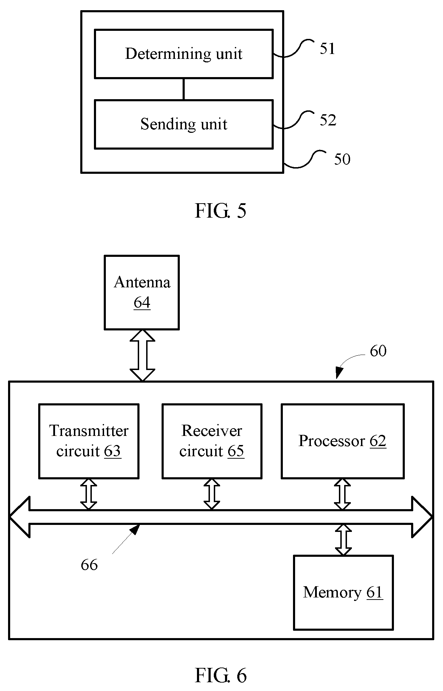

FIG. 5 is a schematic block diagram of a network side device according to an embodiment of the present invention. The network side device 50 in FIG. 5 includes a determining unit 51 and a sending unit 52.

The determining unit 51 determines discontinuous transmission DTX configuration information. The sending unit 52 sends the DTX configuration information to user equipment UE, so that the UE in a non-dedicated connected state discontinuously sends, according to the DTX configuration information, a dedicated physical control channel DPCCH to a serving base station of the UE.

In this embodiment of the present invention, the network side device 50 configures the UE, so that the UE in the non-dedicated connected state discontinuously sends the DPCCH, so as to reduce uplink interference to another user and improve a system capacity.

Optionally, in an embodiment, the network side device 50 further includes a receiving unit 53, where the receiving unit 53 is specifically configured to receive DTX capability information that is of the UE in the non-dedicated connected state and that is sent by the UE by using radio resource control RRC dedicated signaling; or receive DTX capability information that is of the UE in a cell-dedicated channel CELL_DCH state and that is sent by the UE by using RRC dedicated signaling, so that the network side device 50 adopts the DTX capability information of the UE in the CELL_DCH state as DTX capability information of the UE in the non-dedicated connected state, where the DTX capability information of the UE in the non-dedicated connected state is used to indicate to the network side device 50 that the UE supports DTX in the non-dedicated connected state.

Specifically, the RRC dedicated signaling that is used to report the DTX capability information may be signaling such as an RRC connection setup complete, a cell update, a URA update, and an RRC connection request.

Further, the network side device 50 may also adopt DTX capability information of the UE in a CELL_DCH state as the non-dedicated connected state, for example, DTX capability information of a CELL_FACH state, that is, the DTX capability information can be reported to the network side device 50 by using signaling that indicates that the UE supports DTX in the cell-dedicated channel CELL_DCH state. That is, so long as the UE that supports the DTX in the non-dedicated connected state reports DPCCH Discontinuous Transmission support (an indication that indicates that the UE currently supports the CELL_DCH DTX), it represents that the UE supports the DTX in the non-dedicated connected state and DTX in a dedicated connected state.

Further, version information of the UE also needs to be reported when the DTX capability information is reported to the network side device 50 by using the signaling that indicates that the UE supports the DTX in the cell-dedicated channel CELL_DCH state. If the UE supports the DTX in the CELL_DCH state and the UE also supports a common E-DCH, whether the UE supports DTX in a CELL_FACH state can be determined according to the version information of the UE. In this case, a same information element (Information Element, IE) can be used to report capability information that indicates that the UE supports the DTX in the CELL_FACH state and capability information that indicates that the UE supports the DTX in the CELL_DCH state.

Optionally, in an embodiment, the sending unit 52 is specifically configured to send the DTX configuration information by using system broadcast; or send the DTX configuration information by using the RRC dedicated signaling. The DTX configuration information sent by the sending unit 52 includes: a first DTX cycle; a DPCCH length in the first DTX cycle; and a resource DTX offset parameter that is used to indicate a DTX offset corresponding to a different common enhanced dedicated channel common E-DCH resource configuration. The DTX configuration information may further include: a second DTX cycle; a DPCCH length in the second DTX cycle; and time for starting the second DTX cycle.

In this embodiment of the present invention, a DPCCH is discontinuously sent in a non-dedicated connected state, so as to reduce uplink interference to another user and improve a system capacity. In addition, each set of resource is corresponding to a resource DTX offset parameter, so that power of different users is evenly distributed in a time domain, so as to further reduce the uplink interference and increase a quantity of users, thereby further improving the system capacity.

FIG. 6 is a schematic block diagram of user equipment according to another embodiment of the present invention. The user equipment 60 in FIG. 6 includes a processor 61 and a memory 62. The processor 61 and the memory 62 are connected to each other by using a bus system 63.

The memory 62 is configured to store an instruction that enables the processor 61 to perform the following operation: receiving, by the user equipment 60, discontinuous transmission DTX configuration information sent from a network side. When the user equipment 60 is in a non-dedicated connected state, the user equipment 60 determines a transmission pattern of a dedicated physical control channel DPCCH according to the DTX configuration information. The user equipment 60 sends, according to the transmission pattern, the DPCCH to a serving base station of the user equipment 60.

In this embodiment of the present invention, the DPCCH is discontinuously sent in the non-dedicated connected state, so as to reduce uplink interference to another user and improve a system capacity.

In addition, the user equipment 60 may further include a transmitter circuit 64, a receiver circuit 65, an antenna 66, and the like. The processor 61 controls an operation of the user equipment 60, and the processor 61 may also be referred to as a CPU (Central Processing Unit, central processing unit). The memory 62 may include a read-only memory and a random access memory, and provides an instruction and data for the processor 61. A part of the memory 62 may further include a nonvolatile random access memory (NVRAM). In a specific application, the transmitter circuit 64 and the receiver circuit 65 may be coupled to the antenna 66. All components of the user equipment 60 are coupled together by using the bus system 63, where in addition to including a data bus, the bus system 63 may further include a power bus, a control bus, a status signal bus, and the like. However, for clarity of description, various buses are marked as the bus system 63 in the figure.

The methods disclosed in the foregoing embodiments of the present invention may be applied to the processor 61, or implemented by the processor 61. The processor 61 may be an integrated circuit chip and has a signal processing capability. In an implementation process, steps in the foregoing methods may be completed by means of an integrated logic circuit of hardware in the processor 61 or an instruction in a form of software. The foregoing processor 61 may be a general purpose processor, a digital signal processor (DSP), an application-specific integrated circuit (ASIC), a field programmable gate array (FPGA) or another programmable logic device, a discrete gate or a transistor logic device, or a discrete hardware component. The methods, steps, and logical block diagrams disclosed in the embodiments of the present invention may be implemented or performed. The general purpose processor may be a microprocessor, or the processor may also be any conventional processor, or the like. The steps of the methods disclosed with reference to the embodiments of the present invention may be directly performed by a hardware decoding processor, or performed by a combination of hardware and software modules in a decoding processor. The software module may be located in a mature storage medium in the field, such as a random access memory, a flash memory, a read-only memory, a programmable read-only memory, an electrically erasable programmable memory, or a register. The storage medium is located in the memory 62. The processor 61 reads information from the memory 62, and completes the steps of the foregoing methods in combination with the hardware.

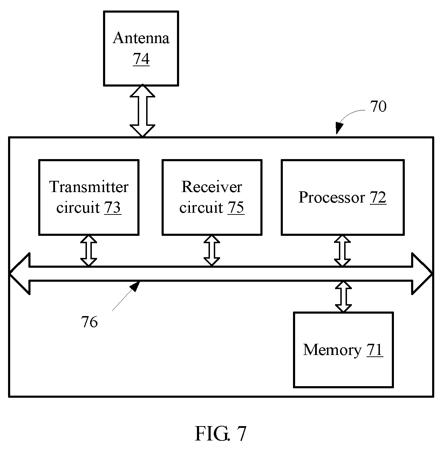

FIG. 7 is a schematic block diagram of a network side device according to another embodiment of the present invention. The network side device 70 in FIG. 7 includes a processor 71 and a memory 72. The processor 71 and the memory 72 are connected to each other by using a bus system 73.

The memory 72 is configured to store an instruction that enables the processor 71 to perform the following operation: determining, by the network side device 70, discontinuous transmission DTX configuration information. The network side device 70 sends the DTX configuration information to UE according to DTX capability information, so that the UE in a non-dedicated connected state discontinuously sends, according to the DTX configuration information, a dedicated physical control channel DPCCH to a serving base station of the UE.

In this embodiment of the present invention, the network side device 70 configures the UE, so that the UE in the non-dedicated connected state discontinuously sends the DPCCH, so as to reduce uplink interference to another user and improve a system capacity.

In addition, the network side device 70 may further include a transmitter circuit 74, a receiver circuit 75, an antenna 76, and the like. The processor 71 controls an operation of the network side device 70, and the processor 71 may be further referred to as a CPU (Central Processing Unit, central processing unit). The memory 72 may include a read-only memory and a random access memory, and provides an instruction and data for the processor 71. A part of the memory 72 may further include a nonvolatile random access memory (NVRAM). In a specific application, the transmitter circuit 74 and the receiver circuit 75 may be coupled to the antenna 76. All components of the network side device 70 are coupled together by using the bus system 73, where the bus system 73 includes a data bus, and may further include a power bus, a control bus, a status signal bus, and the like. However, for clarity of description, various buses are marked as the bus system 73 in the figure.

The methods disclosed in the foregoing embodiments of the present invention may be applied to the processor 71, or implemented by the processor 71. The processor 71 may be an integrated circuit chip and has a signal processing capability. In an implementation process, steps in the foregoing methods may be completed by means of an integrated logic circuit of hardware in the processor 71 or an instruction in a form of software. The foregoing processor 71 may be a general purpose processor, a digital signal processor (DSP), an application-specific integrated circuit (ASIC), a field programmable gate array (FPGA) or another programmable logic device, a discrete gate or a transistor logic device, or a discrete hardware component. The methods, steps, and logical block diagrams disclosed in the embodiments of the present invention may be implemented or performed. The general purpose processor may be a microprocessor, or the processor may also be any conventional processor, or the like. The steps of the methods disclosed with reference to the embodiments of the present invention may be directly performed by a hardware decoding processor, or performed by a combination of hardware and software modules in a decoding processor. The software module may be located in a mature storage medium in the field, such as a random access memory, a flash memory, a read-only memory, a programmable read-only memory, an electrically erasable programmable memory, or a register. The storage medium is located in the memory 72. The processor 71 reads information from the memory 72, and completes the steps of the foregoing methods in combination with the hardware.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

Methods or steps described in the embodiments disclosed in this specification may be implemented by hardware, a software program executed by a processor, or a combination thereof. The software program may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The present invention is described in detail with reference to the accompany drawings and in combination with the exemplary embodiments, but the present invention is not limited thereto. Various equivalent modifications or replacements can be made to the embodiments of the present invention by a person of ordinary skill in the art without departing from the spirit and essence of the present invention, and the modifications or replacements shall fall within the scope of the present invention.

**Claims**

1.  A discontinuous transmission method, comprising:

    Receiving, by user equipment UE, discontinuous transmission DTX configuration information sent from a network side;
    when the UE is in a non-dedicated connected state, determining, by the UE, a transmission pattern of a dedicated physical control channel DPCCH according to the DTX configuration information; and
    sending, by the UE according to the transmission pattern, the DPCCH to a serving base station of the UE.

2.  The method according to claim 1, wherein before the determining, by the UE, a transmission pattern of a dedicated physical control channel DPCCH according to the DTX configuration information, the method further comprises:

    sending DTX capability information of the UE in the non-dedicated connected state to the network side by using radio resource control RRC dedicated signaling; or
    sending DTX capability information of the UE in a cell-dedicated channel CELL_DCH state to the network side by using RRC dedicated signaling, so that the network side adopts the DTX capability information of the UE in the CELL_DCH state as DTX capability information of the UE in the non-dedicated connected state, wherein the DTX capability information of the UE in the non-dedicated connected state is used to indicate to the network side that the UE supports DTX in the non-dedicated connected state.

3.  The method according to claim 1, wherein the receiving, by a the UE, discontinuous transmission DTX configuration information sent from a network side comprises:

    receiving the DTX configuration information by using system broadcast; or
    receiving the DTX configuration information by using RRC dedicated signaling; or
    receiving and adopting DTX configuration information in a cell-dedicated channel CELL_DCH state.

4.  The method according to claim 3, wherein the receiving and adopting DTX configuration information in a cell-dedicated channel CELL_DCH state comprises:

    receiving an indication that is sent by the network side by using the system broadcast or the RRC dedicated signaling and that is used to indicate that the UE adopts all or a part of the DTX configuration information in the cell-dedicated channel CELL_DCH state; or
    receiving the DTX configuration information in the CELL_DCH state, and adopting, in a manner of an agreement between the network side and the UE, all or a part of the DTX configuration information in the CELL_DCH state as DTX configuration information in the non-dedicated connected state.

5.  The method according to claim 3 or 4, wherein the DTX configuration information comprises:

a first DTX cycle;
a DPCCH transmission length in the first DTX cycle; and
a resource DTX offset parameter that is used to indicate a different DTX offset corresponding to a different common enhanced dedicated channel common E-DCH resource configuration.

6. The method according to claim 5, wherein the DTX configuration information may further comprise:

a second DTX cycle;
a DPCCH transmission length in the second DTX cycle; and
time for starting the second DTX cycle.

7. The method according to claim 1, wherein the determining, by the UE, a transmission pattern of a dedicated physical control channel DPCCH according to the DTX configuration information comprises: when the UE has no data transmission, determining, according to the DTX configuration information, a frame number and a subframe number of sending the DPCCH.

8. The method according to claim 7, wherein when the UE has no data transmission, the determining, according to the DTX configuration information, a frame number and a subframe number of sending the DPCCH further comprises: when the UE occupies a common E-DCH resource and has no data transmission, determining, according to the DTX configuration information, the frame number and the subframe number of sending the DPCCH.

9. The method according to claim 7 or 8, wherein the sending, by the UE according to the transmission pattern, the DPCCH to a serving base station of the UE comprises: sending the DPCCH at a time point that is corresponding to the frame number and the subframe number of sending the DPCCH.

10. The method according to any one of claims 1 to 9, wherein the method further comprises:

sending the DTX capability information of the UE in the non-dedicated connected state to the serving base station by using a random access parameter, wherein the DTX capability information of the UE in the non-dedicated connected state is used to indicate to the serving base station that the UE supports the DTX in the non-dedicated connected state, and the random access parameter comprises at least one of: an access signature, physical random access channel PRACH channelization code, and an access sub-channel.

11. The method according to any one of claims 1 to 10, wherein after the receiving, by a the UE, discontinuous transmission DTX configuration information sent from a network side, the method further comprises:

receiving a high speed shared control channel HS-SCCH order sent by the serving base station, so as to activate/deactivate the DTX of the UE in the non-dedicated connected state.

12. A discontinuous transmission method, comprising:

Determining, by a network side, discontinuous transmission DTX configuration information; and
Sending, by the network side, the DTX configuration information to user equipment UE, so that the UE in a non-dedicated connected state discontinuously sends, according to the DTX configuration information, a dedicated physical control channel DPCCH to a serving base station of the UE.

13. The method according to claim 12, wherein the method further comprises:

receiving DTX capability information that is of the UE in the non-dedicated connected state and that is sent by the UE by using radio resource control RRC dedicated signaling; or
receiving DTX capability information that is of the UE in a cell-dedicated channel CELL_DCH state and that is sent by the UE by using RRC dedicated signaling, so that the network side adopts the DTX capability information of the UE in the CELL_DCH state as DTX capability information of the UE in the non-dedicated connected state, wherein the DTX capability information of the UE in the non-dedicated connected state is used to indicate to the network side that the UE supports DTX in the non-dedicated connected state.

14. The method according to claim 12, wherein the sending, by the network side, the DTX configuration information to a UE comprises:

sending the DTX configuration information by using system broadcast; or
sending the DTX configuration information by using RRC dedicated signaling.

15. The method according to claim 14, wherein the sending, by the network side, the DTX configuration information to user equipment UE further comprises:

sending an indication to the UE by using the system broadcast or the RRC dedicated signaling, wherein the indication is used to indicate that the UE adopts all or a part of DTX configuration information of the UE in a cell-dedicated channel CELL_DCH state; or
sending DTX configuration information in a CELL_DCH state to the UE, so that the UE adopts, according to an agreement with the network side, all or a part of the DTX configuration information in the CELL_DCH state as DTX configuration information in the non-dedicated connected state.

16. The method according to claim 14 or 15, wherein the DTX configuration information comprises:

a first DTX cycle;
a DPCCH transmission length in the first DTX cycle; and
a resource DTX offset parameter that is used to indicate a DTX offset corresponding to a different common enhanced dedicated channel common E-DCH resource configuration.

17. The method according to claim 16, wherein the DTX configuration information may further comprise:

a second DTX cycle;
a DPCCH transmission length in the second DTX cycle; and
time for starting the second DTX cycle.

18. The method according to any one of claims 12 to 17, wherein the method further comprises: sending the DTX capability information of the UE in the non-dedicated connected state to the serving base station by using a Frame Protocol, so that the serving base station activates/deactivates the DTX of the UE in the non-dedicated connected state.

19. User equipment, comprising:

a receiving unit, configured to receive discontinuous transmission DTX configuration information sent from a network side;
a determining unit, configured to when the user equipment UE is in a non-dedicated connected state, determine a transmission pattern of a dedicated physical control channel DPCCH according to the DTX configuration information; and
a sending unit, configured to send, according to the transmission pattern, the DPCCH to a serving base station of the UE.

20. The user equipment according to claim 19, wherein the sending unit is further configured to:

send DTX capability information of the UE in the non-dedicated connected state to the network side by using radio resource control RRC dedicated signaling; or
send DTX capability information of the UE in a cell-dedicated channel CELL_DCH state to the network side by using RRC dedicated signaling, so that the network side adopts the DTX capability information of the UE in the CELL_DCH state as DTX capability information of the UE in the non-dedicated connected state, wherein the DTX capability information of the UE in the non-dedicated connected state is used to indicate to the network side that the UE supports DTX in the non-dedicated connected state.

21. The user equipment according to claim 19, wherein the receiving unit is specifically configured to:

receive the DTX configuration information by using system broadcast; or
receive the DTX configuration information by using RRC dedicated signaling; or
receive and adopt DTX configuration information in a cell-dedicated channel CELL_DCH state.

22. The user equipment according to claim 21, wherein the receiving unit is further specifically configured to:

receive an indication that is sent by the network side by using the system broadcast or the RRC dedicated signaling and that is used to indicate that the UE adopts all or a part of the DTX configuration information in the cell-dedicated channel CELL_DCH state; or

receive the DTX configuration information in the CELL_DCH state, and adopt, in a manner of an agreement between the network side and the UE, all or a part of the DTX configuration information in the CELL_DCH state as DTX configuration information in the non-dedicated connected state.

23. The user equipment according to claim 21 or 22, wherein the DTX configuration information received by the receiving unit comprises:

a first DTX cycle;
a DPCCH transmission length in the first DTX cycle; and
a resource DTX offset parameter that is used to indicate a DTX offset corresponding to a different common enhanced dedicated channel common E-DCH resource configuration.

24. The user equipment according to claim 23, wherein the DTX configuration information received by the receiving unit may further comprise:

a second DTX cycle;
a DPCCH transmission length in the second DTX cycle; and
time for starting the second DTX cycle.

25. The user equipment according to claim 19, wherein the determining unit is specifically configured to: when the UE has no data transmission, determine, according to the DTX configuration information, a frame number and a subframe number of sending the DPCCH.

26. The user equipment according to claim 25, wherein the determining unit is further specifically configured to: when the UE occupies a common E-DCH resource and has no data transmission, determine, according to the DTX configuration information, the frame number and the subframe number of sending the DPCCH.

27. The user equipment according to claim 25 or 26, wherein the sending unit is specifically configured to send the DPCCH at a time point that is corresponding to the frame number and the subframe number of sending the DPCCH.

28. The user equipment according to any one of claims 19 to 27, wherein the sending unit is further configured to:

send the DTX capability information of the UE in the non-dedicated connected state to the serving base station by using a random access parameter, wherein the DTX capability information of the UE in the non-dedicated connected state is used to indicate to the serving base station that the UE supports the DTX in the non-dedicated connected state, and the random access parameter comprises at least one of: an access signature, PRACH channelization code, and an access sub-channel.

29. The user equipment according to any one of claims 19 to 28, wherein the receiving unit is further configured to:

receive a high speed shared control channel HS-SCCH order sent by the serving base station, so as to activate/deactivate the DTX of the UE in the non-dedicated connected state.

30. A network side device, comprising:

a determining unit, configured to determine discontinuous transmission DTX configuration information; and
a sending unit, configured to send the DTX configuration information to user equipment UE, so that the UE in a non-dedicated connected state discontinuously sends, according to the DTX configuration information, a dedicated physical control channel DPCCH to a serving base station of the UE.

31. The network side device according to claim 30, wherein the network side device further comprises a receiving unit, and the receiving unit is specifically configured to:

receive DTX capability information that is of the UE and that is sent by the UE by using radio resource control RRC dedicated signaling; or

receive DTX capability information that is of the UE in a cell-dedicated channel CELL_DCH state and that is sent by the UE by using RRC dedicated signaling, so that the network side adopts the DTX capability information of the UE in the CELL_DCH state as DTX capability information of the UE in the non-dedicated connected state, wherein the DTX capability information of the UE in the non-dedicated connected state is used to indicate to the network side that the UE supports DTX in the non-dedicated connected state.

32. The network side device according to claim 30, wherein the sending unit is specifically configured to:

send the DTX configuration information by using system broadcast; or
send the DTX configuration information by using RRC dedicated signaling.

33. The network side device according to claim 32, wherein the sending unit is further specifically configured to:

send an indication to the UE by using the system broadcast or the RRC dedicated signaling, wherein the indication is used to indicate that the UE adopts all or a part of DTX configuration information in a cell-dedicated channel CELL_DCH state; or send DTX configuration information in the CELL_DCH state to the UE, so that the UE adopts, according to an agreement with the network side, all or a part of the DTX configuration information in the CELL_DCH state as DTX configuration information in the non-dedicated connected state.

34. The network side device according to claim 32 or 33, wherein the DTX configuration information sent by the sending unit comprises:

a first DTX cycle;
a DPCCH transmission length in the first DTX cycle; and
a resource DTX offset parameter that is used to indicate a DTX offset corresponding to a different common enhanced dedicated channel common E-DCH resource configuration.

35. The network side device according to claim 34, wherein the DTX configuration information sent by the sending unit may further comprise:

a second DTX cycle;
a DPCCH transmission length in the second DTX cycle; and
time for starting the second DTX cycle.

36. The network side device according to any one of claims 30 to 35, wherein the sending unit is further configured to send the DTX capability information of the UE in the non-dedicated connected state to the serving base station by using a Frame Protocol, so that the serving base station activates/deactivates the DTX of the UE in the non-dedicated connected state.

The UE receives discontinuous transmission DTX configuration information sent by a network side ⟋ 101

When the UE is in a non-dedicated connected state, the UE determines a transmission pattern of a dedicated physical control channel DPCCH according to the DTX configuration information ⟋ 102

The UE sends, according to the transmission pattern, the DPCCH to a serving base station of the UE ⟋ 103

FIG. 1

A network side determines discontinuous transmission DTX configuration information ⟋ 201

The network side sends the DTX configuration information to a UE, so that the UE in a non-dedicated connected state discontinuously sends, according to the DTX configuration information, a dedicated physical control channel DPCCH to a serving base station of the UE ⟋ 202

FIG. 2

| User equipment UE | Serving base station NodeB | Radio network controller RNC |
|---|---|---|

301. UE reports DTX capability information to an RNC

302. DTX configuration information

303. The RNC delivers the DTX configuration information to the UE

304. Calculate a transmission pattern of a DPCCH

305. The UE discontinuously sends the DPCCH

306. Activate/deactivate DTX

FIG. 3

Receiving unit — 41

Determining unit — 42

Sending unit — 43

40

FIG. 4

| Determining unit | 51 |
| Sending unit | 52 |
| | 50 |

FIG. 5

Antenna
64

60

| Transmitter circuit 63 | Receiver circuit 65 | Processor 62 |

66

Memory 61

FIG. 6

Antenna
74

70

Transmitter
circuit 73

Receiver
circuit 75

Processor 72

76

Memory 71

FIG. 7

# INTERNATIONAL SEARCH REPORT

| International application No. |
| --- |
| PCT/CN2013/076332 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H04B; H04Q; H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: huawei, pang lingli, zheng xiaoxiao, base station, RNC, UE, mobile terminal, pattern, number, frame, parameter, config+, set, receiv+, gain, obtain, DTX, DPCCH, uncontinuous transmission

**C. DOCUMENTS CONSIDERED TO BE RELEVANT**

| Category* | Citation of document, with indication, where appropriate, of the relevant passages | Relevant to claim No. |
| --- | --- | --- |
| Y | CN 101030809 A (HUAWEI TECHNOLOGIES CO LTD) 05 September 2007 (05.09.2007) description, page 9, line 4 to page 11, line 1 and figure 9 | 1-36 |
| Y | CN 101543120 A (INTERDIGITAL TECHNOLOGY CORP.) 23 September 2009 (23.09.2009) claims 1-40 | 1-36 |
| Y | CN 101179825 A (HUAWEI TECHNOLOGIES CO LTD) 14 May 2008 (14.05.2008) description, page 7, line 13 to page 9, line 11 and figure 3 | 6, 10, 11, 17, 18, 24, 28, 29, 35, 36 |
| A | CN 102067702 A (QUALCOMM INC.) 18 May 2011 (18.05.2011) the whole document | 1-36 |
| A | SAMSUNG. Discussion on activation/deactivation of dual-cell HSDPA. 3GPP TSG RAN WG1 Meeting#54.R1-083293. 22 August 2008, the whole document | 1-36 |

☐ Further documents are listed in the continuation of Box C.       ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 12 December 2013 (12.12.2013) | 06 March 2014 (06.03.2014) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer CAO, Xiaoning Telephone No. (86-10) 62413294 |
| --- | --- |

Form PCT/ISA /210 (second sheet) (July 2009)

## INTERNATIONAL SEARCH REPORT
Information on patent family members

| | International application No. |
|---|---|
| | PCT/CN2013/076332 |

| Patent Documents referred in the Report | Publication Date | Patent Family | Publication Date |
|---|---|---|---|
| CN 101030809 A | 05.09.2007 | None | |
| CN 101543120 A | 23.09.2009 | US 2008/0132230 A1 | 05.06.2008 |
| | | WO 2008/069950 A2 | 12.06.2008 |
| | | KR 20090085138 A | 06.08.2009 |
| | | EP 2123095 A2 | 25.11.2009 |
| | | KR 20090108096 A | 14.10.2009 |
| | | JP 2010512052 A | 15.04.2010 |
| | | DE 602007007525 E | 12.08.2010 |
| | | EP 2227059 A1 | 08.09.2010 |
| | | TW 200826700 A | 16.06.2008 |
| | | AR 064103 A | 11.03.2009 |
| | | AT 472918 T | 15.07.2010 |
| | | DK 2123095 T | 27.09.2010 |
| | | AT 539580 T | 15.01.2012 |
| CN 101179825 A | 14.05.2008 | WO 2008/025284 A1 | 06.03.2008 |
| | | CN 101132543 A | 27.02.2008 |
| CN 102067702 A | 18.05.2011 | US 2009/0316575 A1 | 24.12.2009 |
| | | WO 2010/008837 A2 | 21.01.2010 |
| | | AU 2009271334 A1 | 21.01.2010 |
| | | MXPA 10013497 A | 31.12.2010 |
| | | TW 201008342 A | 16.02.2010 |
| | | CA 2726323 A1 | 21.01.2010 |
| | | KR 20110022695 A | 07.03.2011 |
| | | EP 2301297 A2 | 30.03.2011 |
| | | EP 2360985 A1 | 24.08.2011 |
| | | INCHENP 201007654 E | 19.08.2011 |
| | | JP 2011525782 A | 22.09.2011 |
| | | PH 12010502711 A | 21.01.2010 |

Form PCT/ISA/210 (patent family annex) (July 2009)

## INTERNATIONAL SEARCH REPORT
### Information on patent family members

| International application No. |
|---|
| PCT/CN2013/076332 |

| Patent Documents referred in the Report | Publication Date | Patent Family | Publication Date |
|---|---|---|---|
| | | VN 27343 A | 26.09.2011 |
| | | RU 2452138 C1 | 27.05.2012 |
| | | HK 1155306 A0 | 11.05.2012 |
| | | NZ 589453 A | 26.10.2012 |
| | | TW 201313049 A | 16.03.2013 |
| | | JP 2013085274 A | 09.05.2013 |
| | | RU 2011144811 A | 10.05.2013 |
| | | CN 103281800 A | 04.09.2013 |

Form PCT/ISA /210 (patent family annex) (July 2009)

# INTERNATIONAL SEARCH REPORT

International application No.

PCT/CN2013/076332

**CLASSIFICATION OF SUBJECT MATTER**

H04B 7/26 (2006.01) i

H04W 48/08 (2009.01) i

Form PCT/ISA /210 (extra sheet) (July 2009)